# NEUE EUROPÄISCHE PATENTSCHRIFT

(11) **EP 0 623 492 B2**
(45) Veröffentlichungstag und Bekanntmachung des Hinweises auf die Entscheidung über den Einspruch: **15.11.2000**
(45) Hinweis auf die Patenterteilung: 15.10.1997
(21) Anmeldenummer: 94104336.6
(22) Anmeldetag: 18.03.1994
(51) Int. Cl.: B60R 21/13

(54) **Überrollschutz-Vorrichtung für ein Kraftfahrzeug**
Safety arch device for an automotive vehicle
Dispositif à arceau de sécurité pour un véhicule automobile

(30) Priorität: 03.05.1993 DE 4314538
(43) Veröffentlichungstag der Anmeldung: 09.11.1994
(60) Teilanmeldung: 96106364.1
(73) Patentinhaber: Bayerische Motoren Werke Aktiengesellschaft, 80788 München (DE)
(72) Erfinder: Heiner, Lothar, D-80933 München (DE)

(56) Entgegenhaltungen:
- EP-A- 0 459 213
- EP-A- 0 500 261
- DE-A- 1 805 449
- DE-A- 3 905 470
- DE-A- 3 930 171
- DE-C- 3 822 461

## Beschreibung

Die Erfindung bezieht sich auf eine Überrollschutz-Vorrichtung für ein Kraftfahrzeug nach dem Oberbegriff des Patentanspruches 1.

Derartige Überrollschutz-Vorrichtungen sind mehrfach vorbekannt, beispielsweise aus der US-A-3 292 726, der DE-C-38 22 461 oder auch durch die DE-A-39 27 265.

Soweit Überrollbügel in der Praxis bisher bekannt geworden sind, etwa bei Personenkraftwagen aber auch bei Traktoren, sind sie aus hochfestem Stahl gefertigt, teils unter Verwendung von Stahlrohren, teils unter Verwendung von Blech-Halbschalen. Diese Bauweise ist aufwendig und damit teuer. Außerdem haben die verwendeten Bauelemente ein hohes Gewicht, was nicht nur grundsätzlich unerwünscht ist, sondern auch besonders kräftige Antriebsvorrichtungen zum schnellen Ausfahren der Überrollbügel bedingt, damit die relativ schweren Bügel in kürzester Zeit in ihre Stützlage gebracht werden können.

Aus der EP-A-0 459 213 ist eine Überrollschutz-Vorrichtung nach dem Oberbegriff des Patentanspruches 1 bekannt, bei der der Antrieb des Überrollbügels mit einem Motor und einem Spindelantrieb erfolgt. Der Motor kann im Crash-Fall äußerst schnell laufen, im willkürlich betriebenen Fall relativ langsam angetrieben sein. Dies setzt einen sehr kräftigen und damit schweren Motor voraus. Die Bauweise der Überrollschutz-Vorrichtung ist darüber hinaus aufwendig, verursacht hohe Kosten und ein hohes Gewicht.

Der Erfindung liegt die Aufgabe zugrunde, eine Überrollschutz-Vorrichtung der vorausgesetzten Bauart zu schaffen, die einfacher aufgebaut ist, weniger zusätzliches Gewicht verursacht und gut in verschiedene Fahrzeugkonzepte integrierbar ist.

Diese Aufgabe wird erfindungsgemäß durch die im Kennzeichen des neuen Hauptanspruchs angegebenen Merkmale gelöst. Durch die Anordnung der als Ausstoßfedern wirkenden Schraubenfedern im Inneren der Standrohre wird der erforderliche Bauraum minimiert. Das die Führungselemente für die Überrollbügel-Schenke aufnehmende Gehäuse kann daher besonders flach gestaltet und gut in verschiedenste Fahrzeug-Karosserien eingebaut werden. Bei Verwendung eines Überrollbügels aus Leichtmetall können auch die Ausstoßfedern schwächer dimensioniert werden, ohne daß der Bügel nicht doch im Crash-Fall genügend schnell nach oben verlagert wird. Wegen der nicht übermäßig stark dimensionierten Federn ist es ohne weiteres möglich, im Bedarfsfall den Überrollbügel nach Lösen der Verriegelungseinrichtung in die eingefahrene Ruhelage zurückzuschieben.

Die Erfindung und weitere vorteilhafte Ausgestaltungen der Erfindung sind im folgenden anhand eines in der Zeichnung dargestellten Ausführungsbeispiels näher erläutert. Es zeigt
- Fig. 1: eine perspektivische Ansicht eines Teils der Überrollschutz-Vorrichtung mit den angrenzenden Blechteilen einer Pkw-Karosserie;
- Fig. 2: eine entsprechende, etwas vergrößerte Teilansicht, jedoch auch mit angedeuteten Verkleidungsteilen;
- Fig. 3: eine weitere Ansicht einer Überrollschutz-Vorrichtung mit ausgefahrenem Bügel;
- Fig. 4: eine vergrößerte Detaildarstellung der Halteeinrichtung für den eingefahrenen Überrollbügel;
- Fig. 5: eine Ausschnittdarstellung der Fig. 4 etwa zum Zeitpunkt des Lösens der Halteeinrichtung;
- Fig. 6: die gelöste Halteeinrichtung;
- Fig. 7: die Sperrvorrichtung für den ausgefahrenen Überrollbügel;
- Fig. 8: eine Darstellung der Einzelteile der Überrollschutz-Vorrichtung und
- Fig. 9: einen Schnitt nach der Linie IX-IX in Fig. 8.

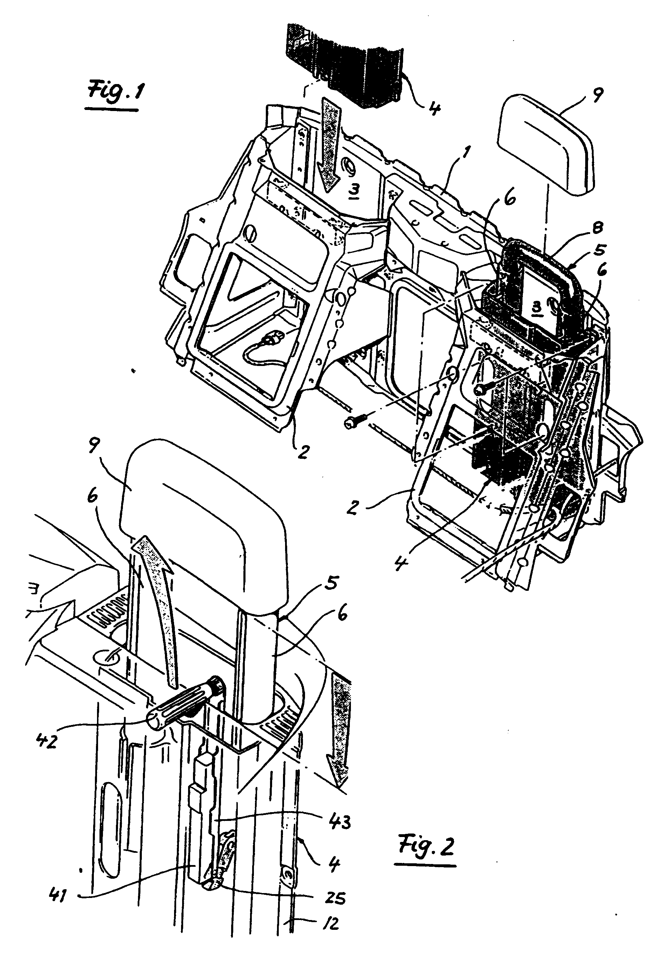

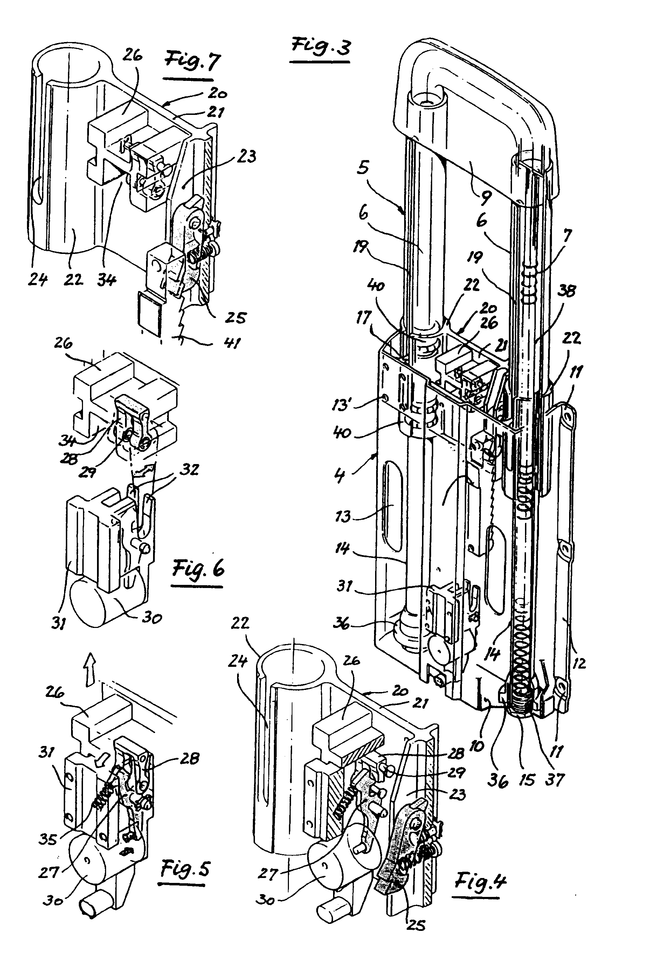

In Fig. 1 der Zeichnung ist eine Querwand 1 eines Cabriolets dargestellt, die etwa lotrecht hinter den rückwärtigen Sitzen in der Karosserie angeordnet ist. Zwischen dieser Querwand 1 und nach vorne unten gerichteten Blech-Rahmenteilen 2 zur Abstützung von Rücksitzen ist ein von oben zugänglicher Raum 3 geschaffen, der jeweils zur Aufnahme eines linken und eines rechten kassettenähnlichen Gehäuses 4 dient. In jedem Gehäuse 4 ist ein U-förmiger Überrollbügel translatorisch verlagerbar aufgenommen, der aus einer in Fig. 1 ersichtlichen abgesenkten Ruhelage in eine über die Fahrzeugbrüstung nach oben überstehende, in Fig. 3 ersichtliche Stützlage verlagerbar ist. Aus der Stützlage kann er nach Lösen einer Verriegelungsvorrichtung von Hand wieder in die Ruhelage zurückbewegt werden.

Die etwa vertikal gerichteten Schenkel 6 werden nach Lösen einer die Überrollbügel 5 in der Ruhelage fixierenden Haltevorrichtung - gesteuert durch einen Überschlag-Sensor - unter der Wirkung von Federn 7 in Zehntelsekunden so weit aus dem Gehäuse ausgeschoben und dann verriegelt, daß sie ihre für den Fall eines Überschlags erforderliche Schutzfunktion ausüben können. Die beiden Schenkel 6 sind durch einen querverlaufenden Steg 8 miteinander verbunden, über den eine gepolsterte Abdeckung 9 geschoben ist.

Die Schenkel 6 des Überrollbügels 5 und im wesentlichen die gesamten Führungselemente der Überrollschutz-Vorrichtung bestehen aus Strangpreßprofilen. Die später noch im einzelnen näher erläuterten Führungselemente sind an dem Gehäuse 4 angeordnet, das im wesentlichen ebenfalls aus einem Strangpreßprofil gebildet ist. Das Gehäuse 4 hat einen zu der Fahrzeugwand 1 hin offenen flachen U-Querschnitt und ist unten durch einen Gehäuseboden 10 verschlossen. Die Ausprägungen 11 an seitlich abstehenden Befestigungsrändern 12 werden gleichzeitig mit dem Ausstanzen der verschiedenen Öffnungen 13, 13' des Gehäuses 4 ausgebildet.

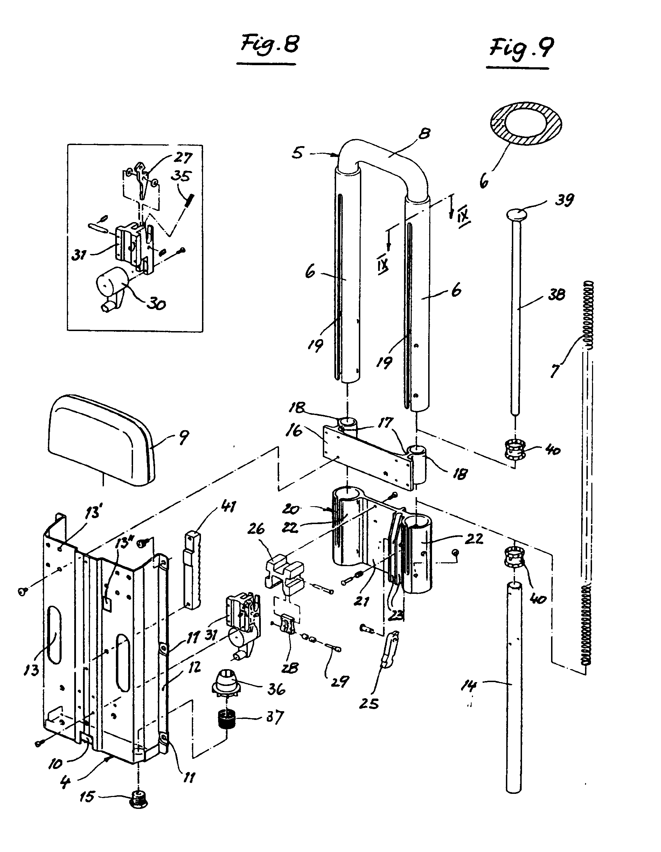

Zur Führung der Überrollbügel 5 sind die insbesondere in den Figuren 3 und 8 erkennbaren Standrohre 14 vorgesehen, die an ihrem unteren Ende ein Innengewinde haben und mit geeigneten Schrauben 15 mit dem Gehäuseboden 10 verschraubt werden. Die Standrohre 14 sind ebenfalls durch Strangpressen hergestellt. An ihrem oberen Ende sind sie durch eine am Gehäuse 4 angeordnete Querplatte 16 - ebenfalls aus Strangpreßprofil - gehalten, die über einen Verbindungssteg 17 zwei Aufnahmebuchsen 18 zur horizontalen Abstützung der Standrohre 14 trägt.

Die Schenkel 6 jedes Überrollbügels 5 sind auf ihrer der Querplatte 16 zugewandten Seite mit Längsschlitzen 19 zum Durchtritt der Verbindungsstege 17 versehen. Die unteren Enden der Schenkel 6 jedes Überrollbügels 5 sind durch ein Querjoch 20 fest miteinander verbunden, mit dem eine sehr hohe Stabilität der Bügel, beispielsweise gegen Aufweitung der Schenkelenden, insbesondere aber auch im Hinblick auf die Torsionsfestigkeit erreicht wird. Das Querjoch 20 ist mit den Schenkeln 6 verschraubt und besteht ebenfalls aus einem Strangpreßprofil. An beiden Enden eines Quersteges 21 des Querjochs 20 sind Aufnahmebuchsen 22 vorgesehen, die die Enden der Schenkel 6 fest umschließen und mit diesen Enden verschraubt sind. Über einen großen Teil ihrer Länge sind die Aufnahmebuchsen 22 mit nach oben offenen Schlitzen 24 versehen, die sich mit den Schlitzen 19 der Schenkel 6 überdecken.

An dem Quersteg 21 des Querjochs 20 sind ferner parallele vertikale Wangen 23 zur Lagerung einer federbelasteten Sperrklinke 25 angeordnet.

Wie man insbesondere aus den Figuren 4 und 7 erkennt, ist am Quersteg 21 des Querjochs 20 ferner ein Haltebock 26 angeordnet, an dem ein am Gehäuse 4 gelagerter Halteriegel 27 eingreifen kann. Bei dem dargestellten Ausführungsbeispiel ist hierzu am Haltebock 26 um eine Querachse schwenkbar eine Haltewippe 28 mit einem Querstift 29 gelagert, an dem der Halteriegel 27 angreifen kann.

Der schon erwähnte Halteriegel 27 ist in einer am Gehäuse 4 befestigbaren und einen Aktuator 30 tragenden Haltekonsole 31 gelagert, die nach oben offene und sich nach oben erweiternde Schlitze 32 zum Eintritt des unteren Endes der Haltewippe 28 aufweist. Dadurch kann beim manuellen Einschieben des Überrollbügels 5 auch dann ein sicheres Eintreten der Wippe in die den Halteriegel 27 lagernde Konsole gewährleistet werden, wenn auch das Gehäuse 4 aufgrund von geringen Karosseriebewegungen verformt, beispielsweise verwunden wird. Die Schlitze 32 sind in zwei vertikalen Rippen 33 der aus Strangpreßprofil gefertigten Haltekonsole 31 ausgebildet, die bei abgesenktem Überrollbügel 5 in einen nach unten offenen Kanal 34 des Haltebocks 26 eingreifen (Figuren 5 bis 7).

Der bereits mehrfach erwähnte Halteriegel 27 ist durch eine Feder 35 in seine Verriegelungsstellung belastet, die in Fig. 4 gezeigt ist. In diese Verriegelungsstellung kann der Bügel durch manuelles Einschieben gebracht werden. Die in den sich erweiternden Schlitzen 32 dabei geführte Haltewippe 28 läuft gegen eine Anlaufschräge des Halteriegels 27 an und bewegt den Halteriegel 27 mit seinem oberen Ende soweit zur Seite, bis der Querstift 29 in die Halteausnehmung des Halteriegels 27 eintritt. Zum sensorgesteuerten Freigeben der Überrollbügel 5 verlagert der Aktuator 30 das untere Ende des Halteriegels 27 zum Quersteg 21 des Querjochs 20 hin gegen die Wirkung der Feder 35. Sobald der Querstift 29 von dem Verriegelungshebel 27 freikommt, beschleunigen die Federn 27 den Überrollbügel 5 nach oben.

In den Figuren 3 und 8 sind auf den unteren Enden der Standrohre 14 verschiebliche Zentrierkegel 36 dargestellt, die unter der Wirkung einer kürzeren Schraubenfeder 37 nach oben belastet sind. Die Zentrierkegel 36 zentrieren einerseits die unteren Enden der eingeschobenen Überrollbügel 5, andererseits bewirken sie insgesamt auch eine geknickte Federkennlinie in dem Sinn, daß das Öffnen durch den Aktuator 30 verbessert und die Anfangsbeschleunigung beim Ausschieben der Überrollbügel 5 erhöht wird.

Aus den Figuren 3 und 8 geht ferner hervor, daß die Ausstoßfedern 7 des Überrollbügels 5 im Inneren der Standrohre 14 angeordnete Schraubenfedern sind und einen Federführungsbolzen 38 umgeben, der oben eine Druckscheibe 39 aufweist.

Vorzugsweise weisen die Standrohre 14 oberhalb und unterhalb der Aufnahmebuchsen 18 der Querplatte 16 Gleitbuchsen 40 für die Schenkel 6 des Überrollbügels 5 auf. Die Schenkel 6 gleiten mit ihren Innenflächen an endseitigen Wülsten der Gleitbuchsen 40.

Wird der Überrollbügel durch Zurückschwenken des Halteriegels 27 freigegeben und von den Federn 7 und 37 nach oben beschleunigt, so läuft am Ende der Hubbewegung die schon beschriebene Sperrklinke 25 auf eine gezahnte Rastleiste 41 auf, die über eine entsprechend ausgebildete Öffnung 13'' im Gehäuse 4 mit einem entsprechenden Vorsprung abgestützt und ferner durch Schrauben an dem Gehäuse 4 befestigt ist. Nach Einrasten der Sperrklinke 25 in einen der Zähne der Rastleiste 41 ist das Querjoch 20 und damit auch der Überrollbügel 5 in seiner nach oben überstehenden Stützlage fixiert. Um die dann erfolgte Verriegelung des Überrollbügels 5 wieder lösen zu können, ist ein mit einem Griff 42 versehener Schieber 43 vorgesehen, der über eine schmale, entsprechend ausgebildete Öffnung von oben über die Zähne der Rastleiste 41 geschoben werden kann und dabei die Sperrklinke 25 von den Zähnen der Rastleiste 41 abhebt. Daraufhin kann dann der Überrollbügel 5 mühelos von Hand in das kassettenähnliche Gehäuse 4 zurückgeschoben werden, bis er dort verriegelt ist.

Weil unter anderem auch die Schenkel 6 des Überrollbügels 5 aus Strangpreßprofilen gefertigt sind, ist es ohne weiteres möglich, den Schenkeln des Überrollbügels einen langgestreckten Querschnitt zu geben. Die längere Querschnittsabmessung verläuft dann in der Richtung, in der die größten Belastungen auftreten. Wie man in Fig. 9 erkennt, kann dabei jeder Schenkel 6 im Querschnitt eine etwa ovale Außenform haben. Ferner kann auch die Innenwandung des Schenkels 6 im Querschnitt etwa oval sein oder auch rund. Auf diese Weise lassen sich sehr gezielt Querschnittsanhäufungen realisieren, die eine Optimierung hinsichtlich der Festigkeit zulassen.

Durch die fast ausschließliche Verwendung von Strangpreßprofilen, die ineinandergesteckt sind oder ineinandergleiten, läßt sich darüber hinaus eine erhebliche Gewichtsersparnis erreichen, außerdem eine spürbare Kostenreduzierung bei trotzdem zu gewährleistender Sicherheit. Die Verwendung von Strangpreßprofilen gestattet es schließlich, ohne größeren Werkzeugaufwand das Überrollschutz-System in seiner Höhe zu verändern und so ggf. an verschieden konzipierte Fahrzeugkarosserien anzupassen. Es brauchen lediglich einige der verwendeten Strangpreßprofil-Teile in einer veränderten Länge abgeschnitten zu werden.

## Patentansprüche

1. Überrollschutz-Vorrichtung für ein Kraftfahrzeug, insbesondere für ein Cabriolet, mit einem zumindest annähernd translatorisch aus einer abgesenkten Ruhelage in eine über die Fahrzeugbrüstung nach oben überstehende Stützlage und zurück verlagerbaren etwa U-förmigen Überrollbügel (5), der mit seinen nach unten gerichteten Schenkeln (6) durch Führungselemente geführt, in Ruhelage durch eine lösbare Haltevorrichtung gehalten, aus dieser Lage nach oben verlagerbar und oben festlegbar ist, wobei die Führungselemente (14, 16, 20) an einem Gehäuse (4) angeordnet sind, das an einer annähernd lotrechten Fahrzeugwand (1) befestigbar ist, und zwei mit ihrem unteren Ende am Gehäuse (4) befestigte Standrohre (14) umfassen, in deren Innerem Schraubenfedern (7) angeordnet sind, dadurch gekennzeichnet, daß zumindest die Schenkel (6) des Überrollbügels (5) und die Führungselemente (14, 16, 20) aus Strangpreßprofilen bestehen und daß der Überrollbügel (5) allein durch die im Innern der Standrohre (14) angeordneten Schraubenfedern (7) nach oben verlagerbar ist, die einen oben eine Druckscheibe (39) aufweisenden Federführungsbolzen (38) umgeben, wobei der Überrollbügel (5) oben durch eine Verriegelungseinrichtung (25, 41) festlegbar ist.

2. Vorrichtung nach Anspruch 1,
dadurch gekennzeichnet, daß die Standrohre (14) an ihren oberen Enden durch eine am Gehäuse (4) angeordnete Querplatte (16) gehalten sind, die über einen Verbindungssteg (17) zwei Aufnahmebuchsen (18) für die Standrohre (14) trägt.

3. Vorrichtung nach Anspruch 2,
dadurch gekennzeichnet, daß die Schenkel (6) des Überrollbügels (5) auf ihrer der Querplatte (16) zugewandten Seite mit Längsschlitzen (19) zum Durchtritt der Verbindungsstege (17) versehen sind.

4. Vorrichtung nach Anspruch 1,
dadurch gekennzeichnet, daß die unteren Enden der Schenkel (6) durch ein Querjoch (20) miteinander verbunden sind.

5. Vorrichtung nach Anspruch 4,
dadurch gekennzeichnet, daß das Querjoch (20) aus einem Strangpreßprofil besteht und an beiden Enden eines Quersteges (21) die Schenkel-Enden umschließende Aufnahmebuchsen (22) aufweist.

6. Vorrichtung nach Anspruch 5,
dadurch gekennzeichnet, daß am Quersteg (21) vertikale Wangen (23) zur Lagerung einer federbelasteten Sperrklinke (25) vorgesehen sind.

7. Vorrichtung nach Anspruch 1,
dadurch gekennzeichnet, daß die Standrohre (14) unten von Zentrierkegeln (36) umgeben sind, die sich über Federn (37) am Gehäuseboden (10) abstützen.

8. Vorrichtung nach Anspruch 2,
dadurch gekennzeichnet, daß die Standrohre (14) oberhalb und unterhalb der Aufnahmebuchsen (18) der Querplatte (16) außen mit Gleitbuchsen (40) für die Schenkel (6) des Überrollbügels (5) versehen sind.

9. Vorrichtung nach Anspruch 1,
dadurch gekennzeichnet, daß die Schenkel (6) des Überrollbügels (5) einen langgestreckten Querschnitt haben.

10. Vorrichtung nach Anspruch 9,
dadurch gekennzeichnet daß die Schenkel (6) im Querschnitt eine etwa ovale Außenform haben.

11. Vorrichtung nach Anspruch 9 oder 10,
dadurch gekennzeichnet, daß die Innenwandung der Schenke (6) im Querschnitt etwa oval ist.

## Claims

1. A roll bar protection system for a motor vehicle, especially for a convertible, with an approximately U-shaped roll bar (5) which can be moved in an at least virtually translatory manner from a sunken resting position into an upwardly-projecting supporting position above the uppermost surface of the vehicle and back again, with the downwardly-directed limbs (6) of the said roll bar (5) guided through guide elements and with the roll bar (5) in a resting position held by a releasable holding device and displaceable upwardly from this position and fixable in an upper position, wherein the guide elements (14, 16, 20) are arranged on a housing (4) which can be secured to an approximately vertical vehicle wall (1) and comprising two vertical tubes (14) secured at their lower ends to the housing (4) with coil springs (7) arranged within them, characterised in that at least the limbs of the roll bar (5) and the guide elements (14, 16, 20) are extruded sections and that the roll bar (5) can be displaced upwardly solely through the coil springs (7) arranged within the vertical tubes (14), which envelop a spring guiding bolt (38) which has a thrust washer (39) at the upper end, wherein the roll bar (5) can be fixed in the upper position via a locking device (25, 41).

2. A device according to claim 1,
characterised in that the vertical tubes (14) are held at their upper ends via a transverse plate (16) arranged on the housing (4), with the said transverse plate (16) bearing two receiving bushes (18) for the vertical tubes (14) via a connection web (17).

3. A device according to claim 2,
characterised in that the limbs (6) of the roll bar (5) are provided on their side facing the transverse plate (16) with elongate slits (19) for the through-passage of the connecting webs (17).

4. A device according to claim 1,
characterised in that the lower ends of the limbs (6) are connected to one another by a cross-member (20).

5. A device according to claim 4,
characterised in that the cross-member (20) comprises an extruded section and is provided with receiving bushes (22) at both ends of a transverse web (21) which envelop the limb ends.

6. A device according to claim 5,
characterised in that vertical projections (23) are provided on the transverse web (21) for the mounting of a spring-loaded detent pawl (25).

7. A device according to claim 1,
characterised in that the vertical tubes (14) are enveloped at the bottom by centring cones (36) which are braced through springs (37) against the housing bottom (10).

8. A device according to claim 2,
characterised in that the vertical tubes (14) are provided above and beneath the receiving bushes (18) of the transverse plate (16) externally with guide bushes (40) for the limbs (6) of the roll bar (5).

9. A device according to claim 1,
characterised in that the limbs (6) of the roll bar (5) have an elongate cross-section.

10. A device according to claim 9,
characterised in that the limbs (6) have an approximately oval external shape in cross-section.

11. A device according to claim 9 or claim 10,
characterised in that the inner wall of the limbs (6) is approximately oval in cross-section.

## Revendications

1. Arceau de sécurité pour véhicules automobiles notamment cabriolets comprenant :
• au moins un arceau de sécurité (5) sensiblement en forme de U, mobile au moins sensiblement en translation entre une position escamotée, abaissée et une position d'appui dépassant vers le haut la partie basse de la carrosserie ou inversement, cet arceau étant guidé avec ses branches (6) tournées vers le bas dans des éléments de guidage, en étant maintenu en position escamotée par un dispositif de fixation amovible, et pouvant être relevé et fixé en position haute à partir de cette position,
• les éléments de guidage (14, 16, 20) étant montés sur un boîtier (4) fixé lui-même à une cloison (1) sensiblement verticale du véhicule, et ayant deux tubes (14) fixés par leur extrémité inférieure au boîtier (4), et logeant des ressorts hélicoïdaux (7),
caractérisé en ce qu'
• au moins les branches (6) de l'arceau (5) et les éléments du guidage (14, 16, 20) sont des profilés tubulaires extrudés, et
• l'arceau de sécurité (5) est uniquement soulevé par les ressorts hélicoïdaux (7) qui sont logés dans les tubes fixes (14), et qui entourent une tige de guidage (38) ayant en partie haute une tête de poussée (39), l'arceau de sécurité (5) étant fixé en position haute par une installation de verrouillage (25, 41).

2. Dispositif selon la revendication 1,
caractérisé en ce que
les tubes fixes (14) sont maintenus à leurs extrémités supérieures par une plaque transversale (16) prévue sur le boîtier (4), et qui porte deux manchons (18) pour les tubes fixes (14) par l'intermédiaire d'une nervure de liaison (17).

3. Dispositif selon la revendication 2,
caractérisé en ce que
les branches (6) de l'arceau de sécurité (5) sont munies de fentes longitudinales (19) pour le passage de la nervure de liaison (17), sur leur côté tourné vers la plaque transversale (16).

4. Dispositif selon la revendication 1,
caractérisé en ce que
les extrémités inférieures des branches (6) sont reliées par une traverse (20).

5. Dispositif selon la revendication 1,
caractérisé en ce que
la traverse (20) est un profilé extrudé et comporte aux deux extrémités d'une aile transversale (21), des manchons (22) entourant les extrémités des branches.

6. Dispositif selon la revendication 6,
caractérisé en ce que
l'aile (21) comporte des nervures verticales (23) pour recevoir un verrou (25) chargé par un ressort.

7. Dispositif selon la revendication 1,
caractérisé en ce que
les tiges fixes (14) sont entourées par des cônes de centrage (36) s'appuyant contre le fond (10) du boîtier par l'intermédiaire de ressorts (37).

8. Dispositif selon la revendication 2,
caractérisé en ce que
les tiges fixes (14) comportent au-dessus et en dessous des manchons (18) de la plaque transversale (16), extérieurement, des paliers coulissants (40) pour les branches (6) de l'arceau de sécurité (5).

9. Dispositif selon la revendication 1,
caractérisé en ce que
les branches (6) de l'arceau de sécurité (5) ont une section allongée.

10. Dispositif selon la revendication 9,
caractérisé en ce que
les branches (6) ont une section de forme extérieure sensiblement ovale.

11. Dispositif selon les revendications 9 ou 10,
caractérisé en ce que
la paroi intérieure des branches (6) a une section sensiblement ovale.
